# EUROPEAN PATENT APPLICATION

(11) **EP 4 653 239 A1**
(43) Date of publication of application: **26.11.2025**
(21) Application number: 25177315.6
(22) Date of filing: 19.05.2025
(51) Int. Cl.: B60L 5/19, B60L 5/30, B60L 5/38, B60L 9/00

(54) **ROTATING CURRENT COLLECTOR**

(30) Priority: 21.05.2024 KR 20240065587
(71) Applicant: Korea Railroad Research Institute, Uiwang-si, Gyeonggi-do 16105 (KR)
(72) Inventor: LEE, Hoyong, 16330 Suwon-si (KR); KIM, Moosun, 06602 Seoul (KR); KWAK, Jae-ho, 16334 Suwon-si (KR); CHO, Hong-shik, 16950 Yongin-si (KR)
(74) Representative: Lewis Silkin LLP

(57) **Abstract**

A rotating current collector includes a current collecting unit, an electrode unit, an upper gear unit and a lower gear unit. The current collecting unit makes contact with an overhead contact line. The electrode unit is connected to a lower portion of the current collecting unit. The upper gear unit is fixed to a lower portion of the electrode unit and has an upper gear. The lower gear unit has a lower gear meshing with the upper gear. The current collecting unit rotates in one direction as the upper gear and the lower gear mesh with each other.

## Description

This application claims priority under 35 U.S.C. § 119 to Korean Patent Application No. 10-2024-0065587, filed on May 21, 2024, the disclosure of which is incorporated by reference herein in its entirety.

### BACKGROUND

### 1. Field of Disclosure

The present disclosure of invention relates to a rotating current collector, and more specifically the present disclosure of invention relates to a rotating current collector applied to a power supply of and electric vehicle to minimize wear on an electrode pads and to reduce maintenance costs.

### 2. Description of Related Technology

The so-called third rail type current collector for railway vehicles uses another rail to supply electricity along the track, and is mostly used in urban railways that are isolated from the external environment by supplying direct current.

Conventionally, in the case of the third rail type current collector, when the current collecting surface contacting the rail is fixed in one position, due to continuous friction on the surface, wear and tear easily occurred, which led to problems such as reduced durability, increased work time and various costs due to replacement.

Thus, as disclosed by Korean Patent No. 10-0381343, in addition to one collector surface, a technology has been developed in which two or more collector surfaces are selectively brought into contact, but this also had the problem that wear occurred only on some surfaces.

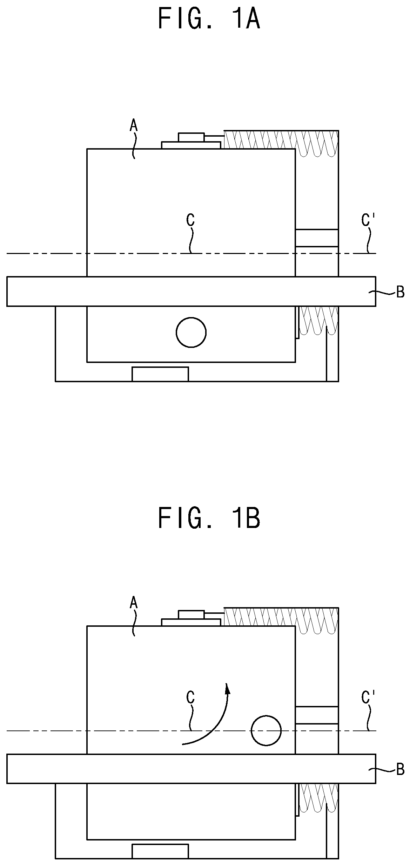

Further, as illustrated in FIG. 1A and FIG. 1B, a technology is also being introduced to change the friction surface with the contact wire (B) by designing the collector surface (A) to rotate 90 degrees around the center point (C) on the collector shoe center line (C') so that a relatively large number of surfaces can come into contact. However, this also has the problem that friction is concentrated in only certain areas.

### SUMMARY

The present invention is developed to solve the above-mentioned problems of the related arts.

The present invention provides a rotating current collector applied to a power supply of and electric vehicle to minimize wear on an electrode pads and to reduce maintenance costs.

According to an example embodiment, a rotating current collector includes a current collecting unit, an electrode unit, an upper gear unit and a lower gear unit. The current collecting unit makes contact with an overhead contact line. The electrode unit is connected to a lower portion of the current collecting unit. The upper gear unit is fixed to a lower portion of the electrode unit and has an upper gear. The lower gear unit has a lower gear meshing with the upper gear. The current collecting unit rotates in one direction as the upper gear and the lower gear mesh with each other.

In an example, the rotating current collector may further include a base unit forming a receiving space, and an inner unit received by the receiving space. The upper gear and the lower gear may extend in a cylindrical shape along a side surface of the inner unit.

In an example, the rotating current collector may further include an elastic unit having a first elastic part and a second elastic part. The first elastic part may be configured to apply an external force along an upper direction to the upper gear, and the second elastic part may be configured to apply an external force along an upper direction to the lower gear.

In an example, the first elastic part may be fixed along an outer surface of the upper gear, the second elastic part may be fixed to an outer surface of the lower gear, and each of the first and second elastic parts may have a coil spring.

In an example, as an external force or a vibration applied to the current collecting unit dissipates, the first elastic part may move the upper gear upwardly and the second elastic part may move the lower gear upwardly.

In an example, the lower gear unit may further include a lower gear tooth formed on an upper portion of the lower gear and having an upper surface inclined along one direction. The lower gear may have a circular ring shape.

In an example, the upper gear unit may further include an upper gear tooth formed on a lower portion of the upper gear and formed along an inclined direction of the upper surface of the lower gear tooth.

In an example, when the upper gear and the lower gear mesh with each other, the upper gear tooth and the lower gear tooth may be combined with each other along the inclined direction of the upper surface, and the upper gear unit may rotate along one direction.

In an example, the lower gear unit may include a groove formed along the inclined direction of the upper surface and passing through the lower gear by a predetermined length, and a slope pin combined to slide at the groove.

In an example, when the upper gear and the lower gear mesh with each other, the slope pin may slide at the groove along one direction and the upper gear unit may rotate along one direction.

In an example, a position of the current collecting unit may change in an up-and-down direction according to an external force or vibration applied from outside. The upper gear and the lower gear may mesh with each other as the position of the current collecting unit changes.

In an example, the current unit may include an electrode rod extending between the current collecting unit and the upper gear unit, and a rotating part combined along an outer surface of the electrode rod.

In an example, the rotating part may be an one way bearing rotating the electrode rod along one direction.

In an example, the current collecting unit may further include a pitching pin combined with a side of the electrode rod and extending to a side frame of a base unit. A position of the pitching pin may change in an opening portion formed in the side frame, as the position of the current collecting unit changes.

According to the present example embodiments, in order to solve the problem of concentrated wear occurring only on a portion of the current collecting surface of a conventional current collector, the current collector is designed to be able to rotate at a constant angle. Thus, since a relatively large contact surface is provided, wear problems may be minimized, thereby minimizing maintenance costs.

In particular, in the case of the above-mentioned rotary current collector, it is designed to rotate at a preset rotation angle in response to external force or vibration, so that rotation is implemented on its own by external force or vibration that occurs in various ways during the operation of the electric vehicle. Thus, even without performing separate collector surface replacement control, the position of the collector surface may be naturally induced to change during the operation process.

That is, while the gear teeth of the upper and lower gears are designed to be inclined in one direction, the groove where the slope pin is engaged is also designed to take into account the inclined direction of the gear teeth. Then, when the upper gear and the lower gear are coupled to each other, they may be coupled while rotating in only one direction, and accordingly, the current collecting unit that rotates integrally with the upper gear may be controlled to rotate in only one direction.

In addition, the electrode unit extending between the above-mentioned current collector unit and the upper gear, in addition to its role of supplying power, is combined with a rotating part composed of a one-way bearing that may rotate in only one direction, thereby suppressing reverse rotation of the above-mentioned current collecting unit.

Thus, since the collecting unit rotates only in one direction by a preset angle, the reverse rotation is performed simultaneously, minimizing the problem of continuous wear of only a specific collector surface, thereby inducing uniform wear overall, thereby relatively improving durability.

### BRIEF DESCRIPTION OF THE DRAWINGS

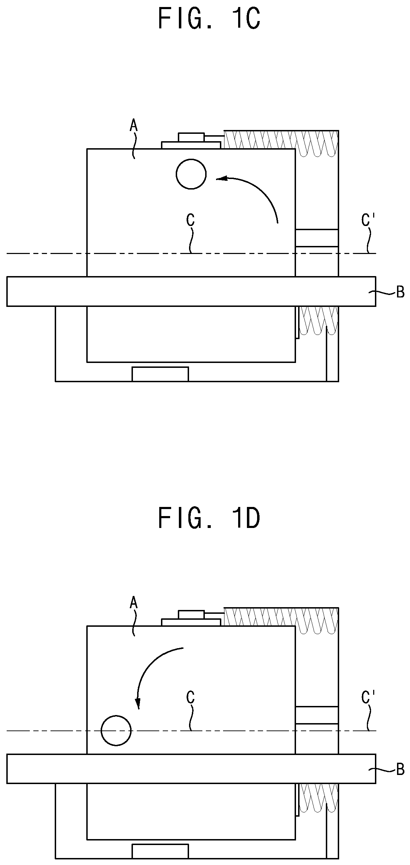

FIG. 1A, FIG. 1B, FIG. 1C and FIG. 1D are schematic diagrams illustrating position changing states of a current collecting surface of the conventional current collector;
FIG. 1 is a perspective view illustrating a rotating current collector according to the present example embodiment;
FIG. 3 is a cross-sectional perspective view illustrating the rotating current collector of FIG. 2, and FIG. 4 is a cross-sectional view of the rotating current collector of FIG. 2; and
FIG. 5A is a development view of a lower gear unit of FIG. 2, and FIG. 5B is a schematic view illustrating a driving state according as an external force is applied to the lower gear unit of FIG. 5B.

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the invention is described more fully hereinafter with reference to the accompanying drawings, in which embodiments of the invention are shown.

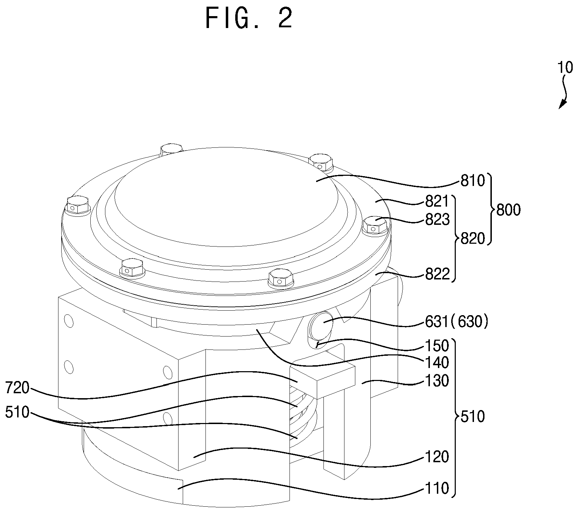

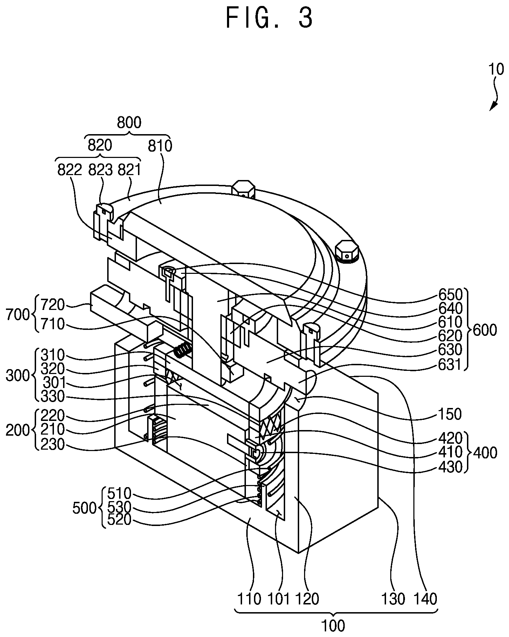

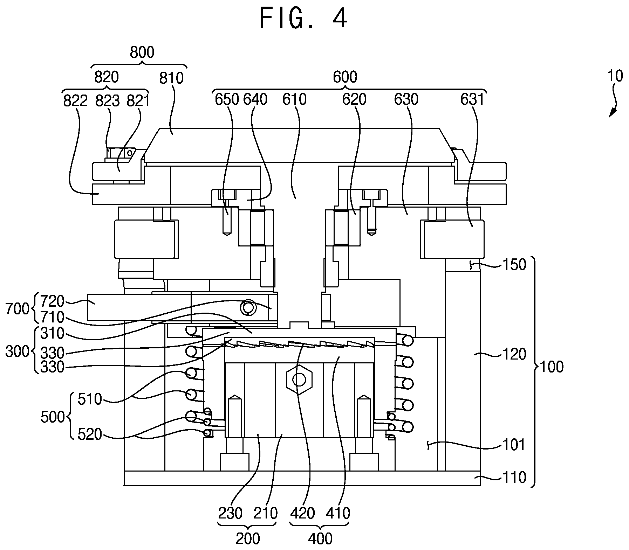

FIG. 1 is a perspective view illustrating a rotating current collector according to the present example embodiment. FIG. 3 is a cross-sectional perspective view illustrating the rotating current collector of FIG. 2, and FIG. 4 is a cross-sectional view of the rotating current collector of FIG. 2.

Referring to FIG. 2 to FIG. 4, the rotating current collector 10 according to the present example embodiment is equipped to an electric vehicle, and receives a power from an electrode wire, and may be a third rail type current collector. Here, the electric vehicle may include an electrically powered railway vehicle, and the electric wire may include an overhead contact line.

In the third rail type current collector, a pad portion 810 of the rotating current collector 10 is positioned toward a side direction and is to make contact with the electric wire disposed at a side. However, in the drawings and explanation below, for the convenience of explanation, the pad portion 810 is illustrated toward an upper direction. In addition, the expressions or explanation of a vertical direction or the side direction merely defines the drawing states of the rotating current collector 10, and thus in an environment where the rotating current collector 10 is actually installed, the location or the position is not limited to that direction.

Herein after, the vertical direction refers to the direction facing upward and downward with respect to FIG. 3 and FIG. 4, and the side direction refers to the direction facing both sides with respect to FIG. 4 in a direction perpendicular to the vertical direction.

The rotating current collector 10 includes a base unit 100, an inner unit 200, an upper gear unit 300, a lower gear unit 400, an elastic unit 500, an electric unit 600, a power connecting unit 700 and a current collecting unit 800.

The base unit 100 forms a lower body of the rotating current collector 10, and includes a base frame 110, a side frame 120, a front frame 130, a rear frame (not shown), and an inclined frame 140. The base frame 110 forms a lower surface. The side frame 120 extends toward an upper direction from both ends of the base frame 110. The front frame 130 and the rear frame are connected to the base frame 110 and the side frame 120, and respectively form a front surface and a rear surface of the base unit 100. The inclined frame 140 extends and slopes upwardly from the side frame 120 and the front frame 130.

Here, the base unit 100 may have a frame structure in which the overall shape is a square pillar or the base frame 110 has a square shape, but is not limited thereto, and may have a frame structure in which the overall shape is a cylinder or the base frame 110 has a circular shape.

In the case of the inclined frame 140, it is obvious that the degree of inclination and the direction of inclination may also be designed in various ways.

In the structure of the base unit 100 as shown in FIG. 2, an opening portion 150 is formed at the upper end of the side frame 120 corresponding to both sides, and the end of a pitching pin 630 described later is combined through the opening portion 150.

The base unit 100 forms a receiving space 101 inside of the base unit 100, and the inner unit 200, the upper gear unit 300, the lower gear unit 400 and the elastic unit 500 are received in the receiving space 101.

The inner unit 200 is received by the receiving space 101, and is formed as a structural body 210 having a predetermined volume. The inner unit 200 may be a cylindrical shape structural body 210, and includes an upper surface 220 and a side surface 230.

The side surface 230 may be a side surface of the cylindrical shape, and the side surface 230 may form an outer surface having a constant distance with respect to a central line passing through the structural body 210.

The lower gear unit 400 is formed along the side surface 230, and includes a lower gear 410, a lower gear tooth 420 and a slope pin 430.

The lower gear 410 has a frame structure forming a body of the lower gear unit 400, and is fixed along the side surface 230 of the inner unit 200. Here, the side surface 230 of the inner unit 200 is the side surface of the cylindrical shape, and the side surface 230 has a circular cross-sectional shape, and thus the lower gear 410 may have a cylindrical frame structure having an overall circular ring shape along the side surface 230.

The lower gear tooth 420 is a tooth formed on an upper surface of the lower gear 410, and may be formed to have a predetermined inclined surface. In addition, the slope pin 430 has a pin structure fixed to the body of the lower gear 410, and the slope pin 430 may extend from an inside of the inner unit 200 to the side surface 230 and may be combined with the body of the lower gear 410.

Here, the detailed structure and movement of the lower gear 410 will be explained below.

The upper gear unit 300 is disposed over the lower gear unit 400, and includes a circular frame 310, an upper gear 320 and an upper gear tooth 30.

The circular frame 310 has a circular plate structure having a predetermined thickness. The circular frame 310 is disposed over the inner unit 200 and forms a predetermined space 301 with the inner unit 200. Here, the space 301 may be variously changed.

The circular frame 310 has a cylindrical edge, and the upper gear 320 is formed downwardly along the cylindrical edge of the circular frame 310. The upper gear 320 may be formed integrally with the circular frame 310, but the upper gear 320 and the circular frame 310 are explained separately for the convenience of explanation.

The upper gear 320 is disposed over the lower gear 410. Just as the lower gear 410 has a circular ring shape frame structure along a circumference of the side surface 230 of the inner unit 200, the upper gear 320 also has a circular ring shape frame structure with the same radius.

In addition, the upper gear tooth 330 is formed on a lower surface of the upper gear 310, and the upper gear tooth 330 corresponds to a gear tooth that is in gear engagement with the lower gear tooth 420 formed on an upper surface of the lower gear 410.

As explained above, since the lower gear tooth 420 has a one way slope, the upper gear tooth 330 may be formed to have the same inclination as the inclination direction of the lower gear tooth 420 so as to enable mesh with the lower gear tooth 420. Here, the gear engagement state between the upper and lower gear teeth 330 and 420 is explained below.

Accordingly, the upper gear 320 and the lower gear 410 mesh with each other along the vertical direction along the side surface 230 of the inner unit 200. Here, the upper gear 320 and the lower gear 410 do not always maintain a state in which the gear teeth are engaged with each other, and the dynamic change state such as engaging or disengaging with each other varies depending on the operation of the current collecting unit 800.

The elastic unit 500 provides a predetermined elastic force to the upper gear 320 and the lower gear 410, and includes a first elastic part 510 and a second elastic part 520.

The first elastic part 510 is fixed along an outer surface of the upper gear 320, and extends upwardly from the base frame 110 of the base unit 100 and then is fixed to the upper gear 320.

The first elastic part 510 may be a coil spring, and then the first elastic part 510 has an overall coil structure and is fixed to the outer surface of the upper gear 320.

Then, the first elastic part 510 provides a predetermined elastic force to the upper gear 320, and the upper gear 320 receives a constant force along the upper direction due to the elastic force. The first elastic part 510 provides a constant elastic force to the upper gear unit 300 along the upper direction.

The second elastic part 520 is fixed at the lower gear 410. The second elastic part 520 extends upwardly from the base frame 110 of the base unit 100, and is fixed to the lower gear 410.

The second elastic part 520 may be a coil spring, and then the second elastic part 520 has an overall coil structure and is fixed to the lower gear 410.

Then, the second elastic part 520 provides a predetermined elastic force to the lower gear 410, and the lower gear 410 receives a constant force along the upper direction due to the elastic force. The second elastic part 520 provides a constant elastic force to the lower gear unit 400 along the upper direction.

A dividing frame 530 may be additionally formed to divide fixing positions of the first and second elastic parts 510 and 520. The dividing frame 530 is a frame structure disposed between the first and second elastic parts 510 and 520, and has an overall cylindrical frame structure. The dividing frame 530 extends upwardly from the base frame 110. Thus, interference between the first and second elastic parts 510 and 520 is minimized and the elastic force is independently applied to the upper gear 320 and the lower gear 410.

The current collecting unit 800 is combined at an upper portion of the base unit 100, and makes contact with the overhead contact line (not shown) to receive the power. The current collecting unit 800 includes a pad portion 810 and a coupling portion 820.

The pad portion 810 is a portion that comes into direct contact with the overhead contact line, and includes a contact surface in the shape of a circular pad as illustrated. Here, the size of the contact surface formed by the pad portion 810 is not limited, and its shape may be a circular shape, but may also be variably designed in various other shapes.

The coupling portion 820 is a combining unit for fixing the pad portion 810, and includes upper and lower frames 821 and 822 and a first combining portion 823. Each of the upper and lower frames 821 and 822 is combined with an edge of the pad portion 810, to fix an upper side and a lower side of the pad portion 810, and then fixes the pad portion 810.

A plurality of the first combining portions 810 is combined along the upper and lower frames 821 and 822, and fixes the pad portion 810 between the upper and lower frames 821 and 822.

The pad portion 810 should be replaced when sufficient wear is performed. Accordingly, the pad portion 810 may be replaced while the first combining portion 810 is removed to the outside. In addition, the pad portion 810 is fixed using the upper and lower frames 821 and 822 through the first combining portion 810.

The electrode unit 600 provides the power transmitted through the pad portion 810 to the power connecting unit 700, and includes an electrode rod 610, a rotating part 620, a pitching pin 630, a rotating coupling part 640 and a second combining part 650.

An upper portion of the electrode rod 610 is fixed at the pad portion 810, and a lower portion of the electrode rod 610 is fixed to the circular frame 310, and the electrode rod 610 has a column shape extending along the vertical direction. The electrode rod 610 includes a material having excellent electrical conductivity and functions as an electrode, and thus the power received from the pad portion 810 is provided to the power connecting unit 700.

The rotating part 620 is combined with an outer surface of the electrode rod 610, and the electrode rod 610 rotates inside of the rotating part 620. Here, the rotating part 620 may be a one way bearing that only allows rotation in one direction and restricts rotation in the an opposite direction.

The rotating direction of the rotating part 620 may be predetermined, and the may be determined considering the slope direction of the upper surface of the lower gear 410.

Thus, the rotating direction of the electrode rod 610 is restricted, and the electrode rod 610 rotates along only one direction. The pad portion 810, and the upper and lower surfaces of the circular frame 310 are fixed at the electrode rod 610, and the electrode rod 610 may rotate integrally with the current collecting unit 800 and the upper gear unit 300.

Thus, the rotating direction of the current collecting unit 800 and the upper gear unit 300 are also restricted to be only one direction.

A pair of the pitching pins 630 may extend from the side surface of the electrode rod 610 along the side direction, and the end of the pitching pin 630 is located in the opening portion 150 of the side frame 120.

Here, the rotating coupling part 640 and the second combining part 650 fix the pitching pin 630, and as illustrated in the figure, the rotating coupling part 640 is formed on the upper surface of the pitching pin 630 with the circular ring shape and the second combining part 650 fixes the rotating coupling part 640 and the pitching pin 630 with each other.

Then, the rotating coupling part 640, the second combining part 650 and the pitching pin 630 are integrally combined with each other, and since the end 631 of the pitching pin 630 is located in the opening portion 150, the electrode rod 610 is not constrained from the rotation.

In this case, the electrode rod 610 rotates integrally with the current collecting unit 800 and the upper gear unit 300, but the pitching pin 630 is not integrally rotated with the electrode rod 610. When the electrode rod 610, the current collecting unit 800 and the upper gear unit 300 moves along the vertical direction, the pitching pin 630 is constrained and moves along the vertical direction. The moving range of the pitching pin 630 is restricted within a range of the length of the opening portion 150 along the vertical direction.

Since the end 631 of the pitching pin 630 passes through the opening portion 150, the moving range of the end 631 of the pitching pin 630 along the vertical direction is restricted within the length of the opening portion 150 along the vertical direction. Likewise, the moving range of the electrode rod 610, the current collecting unit 800 and the upper gear unit 300 along the vertical direction may also be restricted equally.

The power connecting unit 700 is connected to the electrode unit 600 and provides the power to outside, and includes a connecting portion 710 and an extending portion 720. The connecting portion 710 is electrically connected to the electrode rod 610, and the extending portion 720 extends along the side direction additionally from the connecting portion 710 and is protruded to outside of the base unit 100 (referring to FIG. 2).

Then, the power collected by the current collecting unit 800 is provided to the outside, and the power may be supplied.

The driving state of the rotating current collector 10 is explained below.

In the initial state, the pad portion 810 receives the power with making contact with the overhead contact line. However, various external force or vibration may be transmitted in operating the electric vehicle. For example, the external force or vibration may be transmitted to the pad portion 810 for various reasons, such as changes in the width of the rail or unevenness of the rail surface.

When the external force or vibration is transmitted to the pad portion 810, as explained above, the pad portion 810 is connected integrally with the electrode rod 610 and the upper gear unit 300, and thus the external force or the vibration is transmitted to the electrode rod 610 and the upper gear unit 300. The above transmitted external force or vibration may induce a displacement along the vertical direction. Here, the vibration of the electrode rod 610 along the vertical direction, as explained above, is limited to a certain range by the length of the opening portion 150 to which the end 631 of the pitching pin 630 is fixed. Then, the vibration along the vertical direction may be compensated by the pitching pin 630.

However, as the electrode rod 610 moves along the vertical direction, the upper gear 320 of the upper gear unit 300 also moves along the vertical direction, and thus the upper gear 320 and the lower gear 410 mesh with each other.

In the initial state, the upper gear 320 receives the force along the upper direction due to the elastic force of the first elastic part 510 along the upper direction, and likewise the lower gear 410 receives the force along the upper direction due to the elastic force of the second elastic part 520 along the upper direction. However, due to the difference between the elastic forces of the first and second elastic parts 510 and 520, the upper gear 320 and the lower gear 410 are spaced apart from each other without meshing the upper gear tooth 330 with the lower gear tooth 420.

However, as the electrode rod 610 moves along the vertical direction due to the external force or vibration and the upper gear 320 also moves along the vertical direction with the electrode rod 610, the external force along the lower direction larger than the first elastic part 510 is applied to the upper gear 320 and the upper gear 320 makes contact with and meshes with the lower gear 410.

Here, the upper gear tooth 330 of the upper gear 320 mesh with the lower gear tooth 420 of the lower gear 410, and in this coupling process, the upper gear tooth 330 rotates in one direction and is combined while rotating with the lower gear tooth 420. The rotating direction of the upper gear tooth 330 is always maintained constant. When the upper gear 320 moves downwardly and meshes with the lower gear 410, the upper gear 320 should rotate along one direction.

Thus, the electrode rod 610 and the current collecting unit 800 integrally connected with the upper gear 320, rotate along one direction as the upper gear 320 rotates along one direction, and thus the pad portion 810 changes the contact area with the overhead contact line by the rotation.

Further, when the external force or the vibration applied to the upper gear 320 is removed and the upper gear 320 moves upwardly again due to the elastic force of the first elastic part 510 to the initial location, the electrode rod 610 is not rotated in the opposite direction to the above one direction since the rotating part 620 combined with the outer surface of the electrode rod 610 restricts the rotating direction.

The electrode rod 610 and the pad portion 810 integrally connected thereto only maintain a state of rotation in the above one direction, and returning to the initial state is restricted by the rotating part 620.

Thus, the area where the pad portion 810 comes into contact with the overhead contact line is changed by the rotation of the pad portion 810.

In addition, when the external force or the vibration transmitted to the current collecting unit 800 is generated again, the pad portion 810 rotates along the above one direction as the same driving mechanism explained above, and thus the area where the pad portion 810 makes contact with the overhead contact line is changed again.

Accordingly, when the upper gear 320 moves downwardly and performs gear engagement with the lower gear 410 due to the occurrence of repetitive external force or vibration, each time gear engagement is performed, the current collecting unit 800 rotates due to the rotation of the upper gear 320, and thus, the area where the pad portion 810 comes into contact with the overhead contact line changes.

Then, it is possible to induce more uniform contact over the entire area of the pad portion 810) thereby minimizing replacement of the pad portion 810 due to concentrated wear in a specific area of the pad portion 810, and improving the durability of the pad portion 810.

The state in which the upper gear 320 and the lower gear 410 mesh with each other and the upper gear 320 rotates in only one direction is specifically described as follows.

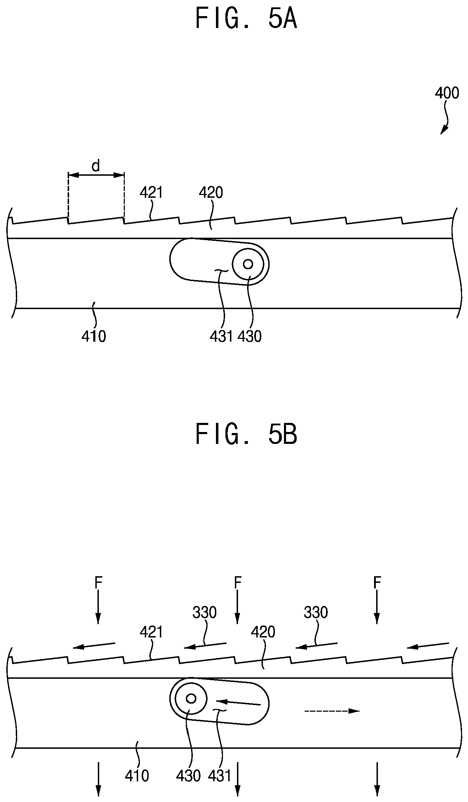

FIG. 5A is a development view of a lower gear unit of FIG. 2, and FIG. 5B is a schematic view illustrating a driving state according as an external force is applied to the lower gear unit of FIG. 5B.

Referring to FIG. 5A, the lower gear unit 400, as illustrated in the figure, includes the lower gear 410, the lower gear tooth 420 and a slope pin 430. A groove 431 at which the slope pin 430 is located is formed on the lower gear 410.

The groove 431 is formed along an inclined direction, and the slope pin 430 formed at the groove 431 is guided by the groove 431. Thus, the position of the slope pin 430 changes along the inclined direction.

In addition, the upper surface 421 of the lower gear tooth 420 is formed along one inclined direction, and all teeth of the lower gear tooth 420 have the same length and same inclined angle.

With the above structure, when the external force F is applied as illustrated in FIG. 5B, the upper gear 320 moves downwardly along the direction of the external force F, although not shown in the figure.

Thus, the upper gear tooth 330 also moves downwardly due to the external force F, and makes contact with the surface of the lower gear tooth 420. Further, when the external force F is applied from top to bottom, the lower gear 410 moves along the lower direction as illustrated with an arrow (here, the lower gear is supported by the elastic force of the second elastic part 520 but the lower gear moves downwardly when the external force is larger than the elastic force). As the lower gear 410 moves, the slope pin 430 moves at the groove 431.

The slope pin 430 slides and is guided by the groove 431 from a lower side (FIG. 5A) of the groove 431 to an upper side of the groove (FIG. 5B). Here, since the groove 431 is formed along the inclined direction, the lower gear 410 moves along the inclined direction too.

When the inclined direction of the groove 431 is opposite to the inclined direction along with the lower gear tooth 420 is formed, the lower gear 410 may move along the direction illustrated as a dotted arrow in the figure.

The upper gear tooth 330 of the upper gear 320 which moves downwardly due to the external force F and is combined with the lower gear tooth 420, moves along the direction illustrated as the arrow due to the inclined direction of the lower gear tooth 420 and is combined with the lower gear tooth 420.

When the upper gear tooth 330 is combined with the lower gear tooth 420, the upper gear tooth 330 rotates along the direction illustrated with the arrow (the left direction in FIG. 5B) and is combined. Here, as explained above, when the lower gear 410 moves downwardly due to the external force F, the slop pin 430 moves along the groove 431 and thus the lower gear 410 moves along the direction illustrated with the dotted arrow (the right direction in FIG. 5B). Thus, the upper gear tooth 330 rotates in the left direction and is more naturally induced to mesh with the lower gear tooth 420.

Accordingly, when the upper gear tooth 330 mesh with the lower gear tooth 420 due to the external force, the lower gear 410 moves to the right direction to a certain extent, and the upper gear tooth 330 always rotates in one direction, which is a constant direction, due to the arrangement of the inclined tooth rows of the lower gear tooth 420.

If the adjacent length (d) of the lower gear tooth 420 is maintained constant, the rotation stroke of the upper gear 320 in one direction may be maintained constant during the process of the upper gear tooth 330 meshing with the lower gear tooth 420.

For example, if the lower gear 420 includes a total of 15 teeth at regular intervals, the lower gear 410 is formed in a circular ring shape, so that a rotation angle of about 24° is formed per tooth.

Accordingly, when the upper gear 330 is lowered once and combined with the lower gear 420, the upper gear 320 performs a constant rotation of about 24° per lowering, and the pad portion 810 that rotates integrally with it also performs the same rotation.

Of course, the number of teeth of the lower gear 420 may be designed to be variously variable, and through this, the angle at which the pad portion 810 rotates during one rotation may be designed to be variously variable.

Furthermore, as explained above, even if the upper gear 330 rises again due to the disappearance of external force, the upper gear 320 that has once rotated is restricted from returning to its original state by the rotating part 620, and thus the rotated state is maintained as is.

According to the present example embodiments, in order to solve the problem of concentrated wear occurring only on a portion of the current collecting surface of a conventional current collector, the current collector is designed to be able to rotate at a constant angle. Thus, since a relatively large contact surface is provided, wear problems may be minimized, thereby minimizing maintenance costs.

In particular, in the case of the above-mentioned rotary current collector, it is designed to rotate at a preset rotation angle in response to external force or vibration, so that rotation is implemented on its own by external force or vibration that occurs in various ways during the operation of the electric vehicle. Thus, even without performing separate collector surface replacement control, the position of the collector surface may be naturally induced to change during the operation process.

That is, while the gear teeth of the upper and lower gears are designed to be inclined in one direction, the groove where the slope pin is engaged is also designed to take into account the inclined direction of the gear teeth. Then, when the upper gear and the lower gear are coupled to each other, they may be coupled while rotating in only one direction, and accordingly, the current collecting unit that rotates integrally with the upper gear may be controlled to rotate in only one direction.

In addition, the electrode unit extending between the above-mentioned current collector unit and the upper gear, in addition to its role of supplying power, is combined with a rotating part composed of a one-way bearing that may rotate in only one direction, thereby suppressing reverse rotation of the above-mentioned current collecting unit.

Thus, since the collecting unit rotates only in one direction by a preset angle, the reverse rotation is performed simultaneously, minimizing the problem of continuous wear of only a specific collector surface, thereby inducing uniform wear overall, thereby relatively improving durability.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A rotating current collector comprising:
a current collecting unit making contact with an overhead contact line;
an electrode unit connected to a lower portion of the current collecting unit;
an upper gear unit fixed to a lower portion of the electrode unit and having an upper gear; and
a lower gear unit having a lower gear meshing with the upper gear,
wherein the current collecting unit rotates in one direction as the upper gear and the lower gear mesh with each other.

2. The rotating current collector of claim 1, further comprising:
a base unit forming a receiving space; and
an inner unit received by the receiving space,
wherein the upper gear and the lower gear extend in a cylindrical shape along a side surface of the inner unit.

3. The rotating current collector of claim 2, further comprising:
an elastic unit having a first elastic part and a second elastic part,
wherein the first elastic part is configured to apply an external force along an upper direction to the upper gear, and the second elastic part is configured to apply an external force along an upper direction to the lower gear.

4. The rotating current collector of claim 3, wherein the first elastic part is fixed along an outer surface of the upper gear, the second elastic part is fixed to an outer surface of the lower gear, and each of the first and second elastic parts has a coil spring.

5. The rotating current collector of claim 3, wherein as an external force or a vibration applied to the current collecting unit dissipates, the first elastic part moves the upper gear upwardly and the second elastic part moves the lower gear upwardly.

6. The rotating current collector of claim 1, wherein the lower gear unit further comprises a lower gear tooth formed on an upper portion of the lower gear and having an upper surface inclined along one direction,
wherein the lower gear has a circular ring shape.

7. The rotating current collector of claim 6, wherein the upper gear unit further comprises an upper gear tooth formed on a lower portion of the upper gear and formed along an inclined direction of the upper surface of the lower gear tooth.

8. The rotating current collector of claim 7, wherein when the upper gear and the lower gear mesh with each other, the upper gear tooth and the lower gear tooth are combined with each other along the inclined direction of the upper surface, and the upper gear unit rotates along one direction.

9. The rotating current collector of claim 6, wherein the lower gear unit comprises:
a groove formed along the inclined direction of the upper surface and passing through the lower gear by a predetermined length; and
a slope pin combined to slide at the groove.

10. The rotating current collector of claim 9, wherein when the upper gear and the lower gear mesh with each other, the slope pin slides at the groove along one direction and the upper gear unit rotates along one direction.

11. The rotating current collector of claim 1, wherein a position of the current collecting unit changes in an up-and-down direction according to an external force or vibration applied from outside,
wherein the upper gear and the lower gear mesh with each other as the position of the current collecting unit changes.

12. The rotating current collector of claim 11, wherein the current collecting unit comprises:
an electrode rod extending between the current collecting unit and the upper gear unit; and
a rotating part combined along an outer surface of the electrode rod.

13. The rotating current collector of claim 12, wherein the rotating part is an one way bearing rotating the electrode rod along one direction.

14. The rotating current collector of claim 12, wherein the current collecting unit further comprises a pitching pin combined with a side of the electrode rod and extending to a side frame of a base unit,
wherein a position of the pitching pin changes in an opening portion formed in the side frame, as the position of the current collecting unit changes.
